# EUROPÄISCHE PATENTANMELDUNG

(11) **EP 4 177 175 A1**
(43) Veröffentlichungstag der Anmeldung: **10.05.2023**
(21) Anmeldenummer: 22216963.3
(22) Anmeldetag: 06.11.2019
(51) Int. Cl.: B65B 19/28, G05B 19/4061, G05B 19/418

(54) **VERFAHREN ZUM ERKENNEN UND/ODER VERMEIDEN VON KOLLISIONEN VON MASCHINENORGANEN EINER VERPACKUNGSMASCHINE**

(30) Priorität: 09.11.2018 DE 102018008815
(62) Teilanmeldung aus: 19207420.1
(71) Anmelder: Focke & Co. (GmbH & Co. KG), 27283 Verden (DE)
(72) Erfinder: Göhrs, Henrik, 27308 Kirchlinteln (DE)
(74) Vertreter: Aulich, Martin

(57) **Zusammenfassung**

Die Erfindung betrifft ein Verfahren zum Erkennen und/oder Vermeiden von Kollisionen zwischen mindestens einem sich in einem Arbeitsraum, in dem solche Kollisionen auftretenden können, bewegenden, insbesondere (taktweise) mittels eines Elektromotors angetriebenen, ersten Maschinenorgan (11, 13, 19) einer Vorrichtung (10) zur Herstellung von Packungen, insbesondere für Zigaretten oder andere Tabakprodukte, oder zwischen sich in diesem Arbeitsraum bewegenden, von dem ersten Maschinenorgan (11, 13, 19) gehandhabten Produkten einerseits und andererseits einem zweiten Teil der Vorrichtung (10), bevorzugt einem zweiten sich bewegenden Maschinenorgan (11, 13, 19). Die Erfindung ist gekennzeichnet durch folgende Maßnahmen:
a) Erzeugen von den Arbeitsraum abbildenden Arbeitsraumdaten (25), wobei innerhalb der Arbeitsraumdaten ein Arbeitsraumdatenbereich als Teilmenge der Arbeitsraumdaten definiert wird, in dem Kollisionen auftreten würden und/oder ein Arbeitsraumdatenbereich als Teilmenge der Arbeitsraumdaten, in dem keine Kollisionen auftreten können,
b1) Erzeugen eines kollisionsfreien Verfahrwegs für das erste sich bewegende Maschinenorgan (11, 13, 19) auf Basis der erzeugten Arbeitsraumdaten (25), gegebenenfalls zusätzlich eines kollisionsfreien Verfahrwegs für das zweite sich bewegende Maschinenorgan (11, 13, 19), sowie Steuern der Bewegung des sich bewegenden ersten Maschinenorgans (11, 13, 19), gegebenenfalls zusätzlich der Bewegung des zweiten sich bewegenden Maschinenorgans, nach Maßgabe des (ggf. jeweiligen) Verfahrwegs, und/oder
b2) Überwachen der Bewegung des sich bewegenden ersten Maschinenorgans (11, 13, 19), gegebenenfalls auch der Bewegung des zweiten sich bewegenden Maschinenorgans (11, 13, 19), auf Kollisionen oder mögliche Kollisionen auf Basis der erzeugten Arbeitsraumdaten (25).

## Beschreibung

Die vorliegende Erfindung betrifft ein Verfahren zum Erkennen und/oder Vermeiden von Kollisionen einerseits zwischen mindestens einem sich in einem Arbeitsraum, in dem solche Kollisionen auftreten können, bewegenden, insbesondere (taktweise) mittels eines Elektromotors angetriebenen ersten Maschinenorgan einer Vorrichtung zur Herstellung von Packungen, insbesondere für Zigaretten oder zweite Tabakprodukte, oder zwischen sich in diesem Arbeitsraum bewegenden, von dem sich bewegenden ersten Maschinenorgan gehandhabten Produkten und andererseits einem zweiten Teil der Vorrichtung, bevorzugt einem zweiten sich bewegenden Maschinenorgan.

Bei Verpackungsmaschinen wurde in den letzten Jahren mehr und mehr die mechanische (Bewegungs-)Kopplung von einzelnen, sich bewegenden Maschinenorganen, wie etwa Schiebern, Förderern, Revolvern etc., an eine drehende Königs- oder Masterwelle aufgegeben zu Gunsten von einzelnen, elektronisch an einen Maschinentakt gekoppelten Servoantrieben für diese Maschinenorgane. Mit dem Einsatz separater Servomotoren für die einzelnen sich bewegenden Maschinenorgane steigt allerdings naturgemäß die Gefahr von Kollisionen zwischen einem Maschinenorgan oder einem von einem solchen gehandhabten Produkt und anderen festen oder sich bewegenden Teilen der Anlage, insbesondere einem weiteren sich bewegenden Maschinenorgan. Wenn sich beispielsweise die Verfahrwege von mehreren sich bewegenden Maschinenorganen in einem insofern gemeinsamen Arbeitsraum überschneiden oder sehr nahe kommen, ist diese Gefahr besonders groß. Fehlerhafte Ansteuerungen, Materialbrüche oder sonstige Fehler können dann schnell zu Kollisionen führen.

Ausgehend hiervon ist es Aufgabe der vorliegenden Erfindung, ein möglichst zuverlässiges und unaufwendiges Verfahren zur Kollisionsvermeidung bzw. Kollisionserkennung anzugeben.

Diese Aufgabe wird gelöst durch ein Verfahren mit den Merkmalen des Anspruchs 1.

Die Erfindung ist demnach gekennzeichnet durch folgende Maßnahmen:
a) Erzeugen von den Arbeitsraum abbildenden Arbeitsraumdaten, wobei innerhalb der Arbeitsraumdaten ein Arbeitsraumdatenbereich als Teilmenge der Arbeitsraumdaten definiert wird, in dem Kollisionen auftreten würden und/oder ein Arbeitsraumdatenbereich als Teilmenge der Arbeitsraumdaten, in dem keine Kollisionen auftreten können,
b1) Erzeugen eines kollisionsfreien Verfahrwegs für das sich bewegende Maschinenorgan auf Basis der erzeugten Arbeitsraumdaten, gegebenenfalls zusätzlich eines kollisionsfreien Verfahrwegs für das zweite sich bewegende Maschinenorgan, sowie Steuern der Bewegung des sich bewegenden Maschinenorgans, gegebenenfalls zusätzlich der Bewegung des zweiten sich bewegenden Maschinenorgans, nach Maßgabe des (ggf. jeweiligen) Verfahrwegs, und/oder
b2) Überwachen der Bewegung des sich bewegenden Maschinenorgans auf Kollisionen oder mögliche Kollisionen auf Basis der erzeugten Arbeitsraumdaten, gegebenenfalls auch der Bewegung des zweiten sich bewegenden Maschinenorgans.

"Gegebenenfalls" meint jeweils, dass die so bezeichneten Maßnahmen insbesondere und bevorzugt dann in Betracht kommen, wenn das Verfahren gerade Kollisionen zwischen dem sich bewegenden Maschinenorgan bzw. den von diesen gehandhabten Produkten und einem bzw. dem zweiten sich bewegenden Maschinenorgan erkennen/vermeiden soll.

Es versteht sich im Übrigen, dass es ohne Weiteres im Rahmen der Erfindung liegt, das Verfahren zum Erkennen und/oder Vermeiden von Kollisionen zwischen mehr als zwei angetriebenen, sich in einem Arbeitsraum bewegenden Maschinenorganen anzuwenden.

Insofern im Weiteren bestimmte Merkmale ausschließlich in Verbindung mit dem (ersten) sich bewegenden Maschinenorgan genannt sein sollten, sollen diese dementsprechend in gleicher Weise in Verbindung bzw. im Zusammenhang mit dem zweiten bzw. weiteren sich bewegenden Maschinenorgan denkbar bzw. offenbart sein.

Was die den Arbeitsraum abbildenden Arbeitsraumdaten betrifft, so können diese vorzugsweise (insbesondere sämtliche) mögliche Positionen oder Bewegungen des sich in dem Arbeitsraum bewegenden ersten Maschinenorgans abbilden und/oder der von diesem gehandhabten Produkte (mittelbar oder unmittelbar).

In diesem Fall zeichnet sich der Arbeitsraumdatenbereich, der so definiert ist, dass dort Kollisionen auftreten würden, in der Regel gerade dadurch aus, dass das sich bewegende erste Maschinenorgan oder das von diesem gehandhabte Produkt an der entsprechenden, in diesen Arbeitsraumdatenbereich fallenden Position (bzw. bei einer Bewegung in diesem Bereich) mit einem anderen Teil der Maschine kollidieren würde.

In ähnlicher Weise zeichnet sich der Arbeitsraumdatenbereich, der so definiert ist, dass dort keine Kollisionen auftreten können, in der Regel gerade dadurch aus, dass das sich bewegende erste Maschinenorgan oder das von diesem gehandhabte Produkt an der entsprechenden, in diesen Arbeitsraumdatenbereich fallenden Position (bzw. bei einer Bewegung in diesem Bereich) nicht mit einem anderen Teil der Maschine kollidieren würde.

Das geschilderte Abbilden der Bewegungen bzw. Positionen des sich bewegenden ersten und/oder zweiten Maschinenorgans (und ggf. weiterer Maschinenorgane) durch die Arbeitsraumdaten kann dabei (unmittelbar oder mittelbar) auf vielfältige Weise geschehen.

Die Arbeitsraumdaten können beispielsweise Werte von Parametern eines das sich bewegende erste Maschinenorgan antreibenden, regelbaren Motorantriebs des ersten Maschinenorgans, insbesondere eines Servoantriebs umfassen, insbesondere Drehwinkelwerte oder Drehmomentwerte. Gegebenenfalls können die Arbeitsraumdaten zusätzlich Werte solcher Parameter eines zweiten, das zweite sich bewegende Maschinenorgan antreibenden, regelbaren Motorantriebs des sich bewegenden zweiten Maschinenorgans umfassen, insbesondere eines Servoantriebs.

Die Erzeugung solcher Arbeitsraumdaten erfolgt vorzugsweise vor der Inbetriebnahme der Vorrichtung. Insbesondere automatisch oder teilautomatisch und rechnergestützt.

Für den Fall, dass Kollisionen zwischen dem ersten sich bewegenden Maschinenorgan und einem/dem zweiten sich bewegenden Maschinenorgan erkannt oder verhindert werden sollen, bilden die den Arbeitsraum abbildenden Arbeitsraumdaten bevorzugt zusätzlich (insbesondere sämtliche) mögliche Positionen oder Bewegungen des zweiten sich bewegenden Maschinenorgans ab. Bei weiteren bzw. mehr als zwei sich bewegenden Maschinenorganen entsprechend auch die möglichen Positionen/Bewegungen der weiteren Maschinenorgane.

Gemäß einer weiteren Konkretisierung der Erfindung können die erzeugten Arbeitsraumdaten mitsamt dem/den definierten Arbeitsraumdatenbereich(en) in einem Speicher (insbesondere einer Recheneinrichtung, wie einem Computer oder dergleichen) hinterlegt werden (in einem Arbeitsspeicher oder einem Festspeicher).

Bevorzugt können sie dabei in einer Datenbank des Speichers hinterlegt werden, insbesondere in einer Tabelle der Datenbank.

Vorzugsweise werden die Arbeitsraumdaten (insbesondere ausgehend von dem Speicher, in dem sie hinterlegt sein können) einer das sich bewegende erste Maschinenorgan steuernden Steuerung der Vorrichtung bevorzugt automatisch übermittelt, insbesondere vor oder bei Inbetriebnahme der Vorrichtung. Gegebenenfalls auch einer Steuerung des zweiten sich bewegenden Maschinenorgans bzw. entsprechend gegebenenfalls Steuerungen von weiteren Maschinenorganen.

Gemäß einer weiteren Variante können die Arbeitsraumdaten in einem Cloud-Speicher hinterlegt bzw. gespeichert sein und dann von diesem per Datenfernübertragung an die Steuerung des jeweiligen sich bewegenden Maschinenorgans übermittelt werden.

Was weitere Details der Erzeugung der Arbeitsraumdaten betrifft, so können diese insbesondere automatisch oder teilautomatisch mittels eines auf einem Rechner oder Computer ablaufenden Programms erzeugt werden, das ein digitales Abbild (digitaler Zwilling) der Vorrichtung oder eines mindestens das erste sich bewegende Maschinenorgan, gegebenenfalls auch das zweite sich bewegende Maschinenorgan, umfassenden Vorrichtungsbereichs erstellt, wobei das digitale Abbild insbesondere die möglichen Bewegungen oder Positionen des sich bewegenden ersten Maschinenorgans, gegebenenfalls auch des zweiten sich bewegenden Maschinenorgans, in dem Arbeitsraum simulieren kann, vorzugsweise zusammen mit den von dem sich bewegenden ersten Maschinenorgan gehandhabten Produkten.

Dieses digitale Abbild könnte dann beispielsweise dazu verwendet werden, für einen Werker ein virtuelles Abbild der Vorrichtung bzw. des Vorrichtungsbereichs zu erzeugen (ggf. mittels entsprechender Virtual Reality (VR) Brillen oder geeigneter Projektoren). Mit anderen Worten könnte das digitale Abbild beispielsweise an eine VR-Brille übertragen werden, die aus diesem einen virtuelles Abbild erzeugt oder an Projektoren, die in einem (freien) Raum ein entsprechendes virtuelles Abbild erzeugen.

Die Arbeitsraumdaten können allgemein mittels eines Simulationsprogramms erzeugt werden, das die möglichen Bewegungen oder Positionen des sich bewegenden ersten Maschinenorgans und/oder von dem Maschinenorgan gehandhabten Produkten in dem Arbeitsraum simulieren kann, gegebenenfalls zusammen mit den möglichen Bewegungen oder Positionen des zweiten sich in dem Arbeitsraum bewegenden Maschinenorgans.

Speziell zur Überwachung der Bewegung des (jeweiligen) Maschinenorgans auf Kollisionen oder mögliche Kollisionen während des Betriebs der Vorrichtung kann vorgesehen sein, dass die Ist-Arbeitsraumdaten erfasst werden, die die aktuellen Ist-Positionen des sich bewegenden ersten Maschinenorgans in dem Arbeitsraum beschreiben, gegebenenfalls auch die Ist-Positionen des zweiten sich bewegenden Maschinenorgans, und/oder die Ist-Positionen von jeweiligen Produkten in dem Arbeitsraum, die das sich bewegende erste Maschinenorgan handhabt. Anschließend werden diese Ist-Arbeitsraumdaten oder aus den Ist-Arbeitsraumdaten abgeleitete, zukünftige Positionen des sich bewegenden ersten Maschinenorgans bzw. der Produkte beschreibende Prognose-Arbeitsraumdaten mit den erzeugten Arbeitsraumdaten daraufhin verglichen, ob die Ist-Arbeitsraumdaten zu dem Arbeitsraumdatenbereich gehören, in dem Kollisionen auftreten würden oder ob sie zu dem Arbeitsraumdatenbereich gehören, in dem keine Kollisionen auftreten können.

Für den Fall, dass auf Basis des Vergleichs erkannt wird, dass eine Kollision erfolgt ist oder eine Kollision bevorsteht, kann die weitere Bewegung des sich bewegenden Maschinenorgans gestoppt werden, gegebenenfalls auch des zweiten sich bewegenden Maschinenorgans, insbesondere, indem der/die Antrieb(e) desselben/desselben gestoppt wird/werden.

Zusätzlich zu einem Arbeitsraumdatenbereich, in dem Kollisionen auftreten werden und zusätzlich zu einem Arbeitsraumdatenbereich, in dem keine Kollisionen auftreten können, kann erfindungsgemäß im Übrigen vorgesehen werden, einen kollisionsnahen Arbeitsraumdatenbereich zu definieren, der benachbart ist zu dem Arbeitsraumdatenbereich, in dem die Kollisionen auftreten würden.

Im Rahmen des Definierens des Arbeitsraumdatenbereichs, in dem Kollisionen auftreten würden, kann weiter eine Unterteilung erfolgen in einen Arbeitsraumdatenbereich, in dem Kollisionen zwischen von dem sich bewegenden ersten Maschinenorgan gehandhabten Produkt einerseits und einem zweiten Teil der Vorrichtung, insbesondere dem zweiten sich bewegenden Maschinenorgan, auftreten würden, und in einen insbesondere anderen (separaten) Arbeitsraumdatenbereich, in dem Kollisionen auftreten würden zwischen dem sich bewegenden ersten Maschinenorgan und einem zweiten Teil der Vorrichtung, insbesondere dem zweiten sich bewegenden Maschinenorgan.

Weiter kann vorgesehen sein, im Rahmen des Definierens des Arbeitsraumdatenbereichs, in dem Kollisionen auftreten würden, in einem/dem definierten Arbeitsraumdatenbereich, in dem Kollisionen zwischen von dem sich bewegenden ersten Maschinenorgan gehandhabten Produkten und einem zweiten Teil der Vorrichtung auftreten würden, insbesondere dem zweiten sich bewegenden Maschinenorgan, einen Teildatenbereich (als Teildatenmenge) zu definieren, in dem Kollisionen erster (größerer) Schwere auftreten, und einen Teildatenbereich, in dem Kollisionen zweiter, gegenüber der ersten Schwere geringerer Schwere auftreten. Hierdurch könnten besonders schwere bzw. gravierende Produktkollisionen von weniger schweren/gravierenden Produktkollisionen unterschieden werden. Davon abhängig könnten dann insbesondere automatisch unterschiedliche Maßnahmen eingeleitet werden. Für den Fall einer besonders schweren Produktkollision, bei der als sicher gelten kann, dass das Produkt Schaden genommen hat, könnte beispielsweise vorgesehen sein, das betreffende Produkt automatisch aus der Vorrichtung auszuschleusen. Oder es könnte vorgesehen sein, die Vorrichtung mindestens in diesem Bereich automatisch anzuhalten und ggf. zu sperren, wobei die Sperre erst durch einen manuellen Eingriff eines Bedieners/Werkers aufgehoben werden könnte.

Weitere Merkmale der vorliegenden Erfindung ergeben sich aus den beigefügten Patentansprüchen, der nachfolgenden Beschreibung bevorzugter Ausführungsbeispiele der Erfindung sowie den beigefügten Zeichnungen. Darin zeigt:
- Fig. 1: eine Schrägansicht eines Ausschnitts einer Verpackungsmaschine mit sich in einem Arbeitsraum, in dem Kollisionen auftreten können, bewegenden Maschinenorganen,
- Fig. 2-4: Prinzipdarstellungen von verschiedenen Möglichkeiten, Arbeitsraumdaten für ein erfindungsgemäßes Verfahren zum Erkennen und/oder Vermeiden von Kollisionen zwischen oder unter Beteiligung der Maschinenorgane zu erzeugen,
- Fig. 5: eine Schnittansicht der Verpackungsmaschine aus Fig. 1 entlang der Schnittlinie V-V aus Fig. 1,
- Fig. 6: eine Schnittansicht der Verpackungsmaschine entsprechend Schnittlinie VI-VI in Fig. 5,
- Fig. 7: eine Schnittansicht der Verpackungsmaschine entsprechend Schnittlinie VII-VII in Fig. 5,
- Fig. 8-9: exemplarische Visualisierungen von erzeugten Arbeitsraumdaten.

Die vorstehend dargestellten erfindungsgemäßen Zusammenhänge werden nachfolgend noch kurz anhand einer speziellen Vorrichtung zur Verpackung von Produkten erläutert, nämlich einer Verpackungsmaschine 10 zur Verpackung von Zigaretten bzw. zur Herstellung von Zigarettenpackungen mit Zigaretten als Packungsinhalt, die zu diesem Zweck nur ausschnittsweise dargestellt ist. Verpackungsmaschinen für Zigaretten oder andere Produkte sind dem Fachmann bekannt und werden daher vorliegend nicht näher beschrieben. Es versteht sich, dass das erfindungsgemäße Verfahren auch bei anderen Arten von Verpackungsvorrichtungen bzw. Verpackungsmaschinen anwendbar ist.

Weiter versteht es sich, dass das erfindungsgemäße Verfahren in jeglichen Bereichen einer Verpackungsmaschine angewandt werden kann, in denen sich ein, zwei oder noch mehr Maschinenorgane der Verpackungsmaschine in einem Arbeitsraum bewegen, in dem es zu Kollisionen eines sich bewegenden Maschinenorgans oder von von einem solchen gehandhabten Produkten mit einem anderen sich bewegenden Maschinenorgan kommen kann, indem sich die jeweiligen Bewegungsbahnen bzw. Verfahrwege dort kreuzen, überschneiden oder zumindest (gefährlich) nahe kommen.

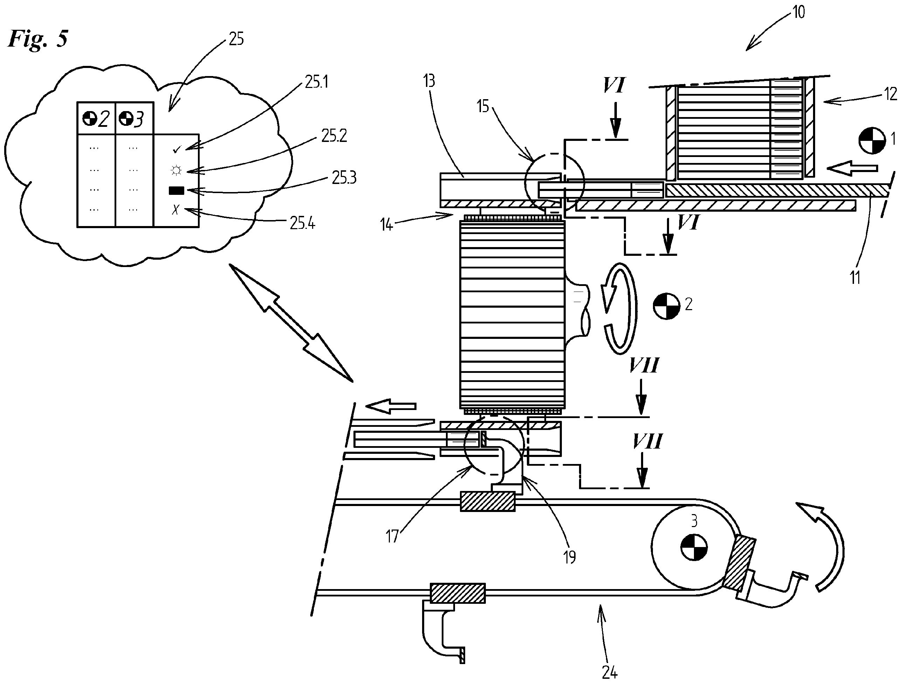

In dem gezeigten Beispiel sind zwei Bereiche 15, 17 gezeigt, vgl. Fig. 5, in denen es zu Kollisionen entweder von sich bewegenden Maschinenorganen untereinander kommen kann (Bereich 17) oder von Produkten mit einem sich bewegenden Maschinenorgan (Bereich 15).

In dem ersten möglichen Kollisionsbereich 15 sind konkret mehrere erste, sich im Maschinentakt bzw. taktweise hin- und herbewegende Maschinenorgane, nämlich Einschieber 11 zu sehen, die aus einem Zigarettenmagazin 12 jeweils von ihnen gehandhabte Produkte, nämlich Zigaretten 22 bzw. Zigarettengruppen 23 in zweite sich im Maschinentakt bewegende Maschinenorgane, nämlich bereitgehaltene, sich taktweise (weiter-)bewegende Taschen 13 eines Taschenförderers 14 einschieben.

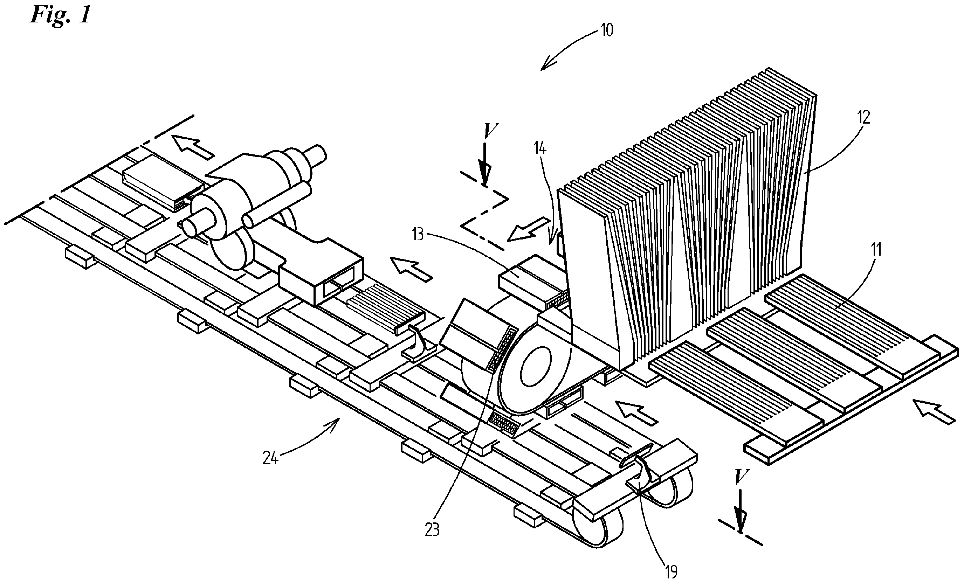

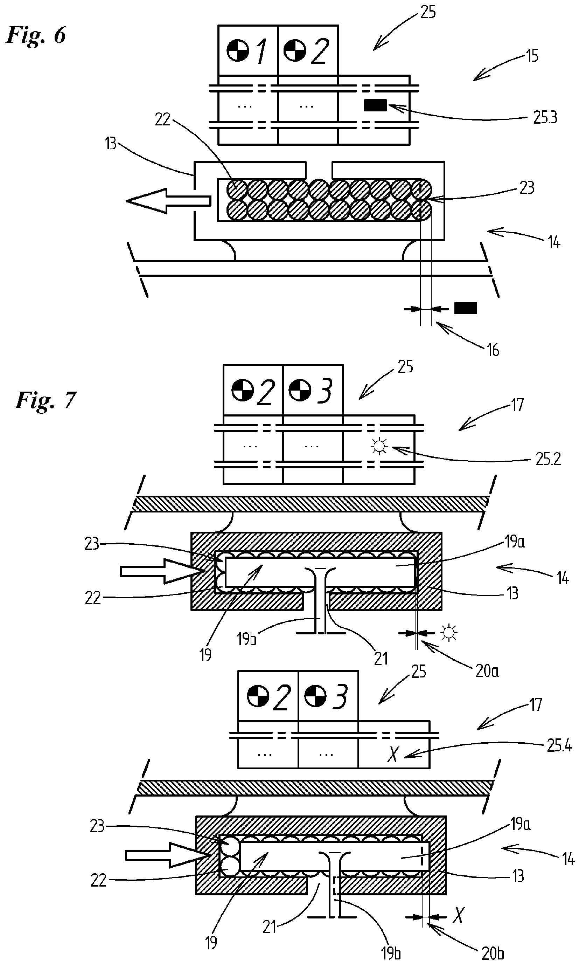

Die Einschieber 11 werden zu diesem Zweck jeweils mittels nicht dargestellter Servoantriebe bzw. Servomotoren in der in Fig. 1 gezeigten Weise (vorliegend horizontal) unter Mitnahme der jeweiligen Zigarettengruppen 23 des Zigarettenmagazins 12 in Richtung der bereitgehaltenen Taschen 13 des Taschenförderers 14 bewegt und schieben die jeweilige Gruppe 23 in eine zugordnete Tasche 13, vgl. auch Fig. 5 und 6.

Besonders wichtig ist nun, dass es in dem Bereich 15 beispielsweise durch Synchronisationsfehler oder dergleichen zu einer Kollision der jeweiligen von den ersten Maschinenorganen, nämlich den Einschiebern 11 gehandhabten Produkten, nämlich den Zigarettengruppen 23, mit sich innerhalb desselben Arbeitsraums bewegenden zweiten Maschinenorganen kommen kann, nämlich mit der jeweiligen bereit gehaltenen Tasche 13 des Förderers, insbesondere mit einer oder mehreren Wänden der jeweiligen Tasche 13 desselben. Beispielsweise dann, wenn - wie in Fig. 6 angedeutet - die jeweilige Gruppe 23 relativ seitlich versetzt zu einer der seitlichen Taschenwände in Richtung der Tasche 13 geschoben wird. In Fig. 6 ist dieser seitliche Relativversatz zwischen Zigarettengruppe 23 und rechter Taschenwand der Tasche 13 exemplarisch gezeigt und mit der Bezugsziffer 16 versehen.

In dem zweiten möglichen Kollisionsbereich 17 erfolgt nach einer Förderung der jeweiligen Zigarettengruppen 23 in den Taschen 13 entlang einer umlaufenden Förderstrecke ein Ausschieben der jeweiligen Zigarettengruppe 23 aus der jeweiligen Tasche 13, um diese dann im weiteren Verlauf in der Maschine 10 in bekannter Weise weiterverarbeiten bzw. in jeweils eine Zigarettenpackung verpacken zu können.

Für dieses Ausschieben werden an einem umlaufenden Förderer 24 befestigte Ausschieber 19 verwendet, die jeweils über eine (aufrechte) Ausschieberplatte 19a verfügen, deren Abmessungen so an die Innenkontur einer Tasche 13 angepasst ist, dass sie unter Mitnahme der jeweiligen Zigarettengruppe 23 quer zur Taschenförderrichtung längs durch die Tasche 13 geführt werden kann.

Um dies zu ermöglichen, verfügt jede Tasche 13 über einen unteren Längsspalt 21, durch den ein Traghals 19b des jeweiligen Ausschiebers 19, an dem die Ausschieberplatte 19a befestigt ist, während der Bewegung durch die Tasche 13 hindurchgeführt werden kann.

Ein geringer seitlicher Versatz 20a des Ausschiebers 19 bzw. insbesondere der Ausschieberplatte 19a relativ zur rechten Taschenwand, vgl. Fig. 7 oben, führt noch nicht zu einer Kollision des Ausschiebers 19 bzw. der Ausschieberplatte 19a mit der das erste bewegliche Maschinenorgan bildenden Tasche 13 bzw. der Taschenwand.

Bei einem größeren seitlichen Versatz 20b dagegen, vgl. vgl. Fig. 7 unten, kollidiert der Ausschieber 19 bzw. die Ausschieberplatte 19a dagegen mit der Tasche 13 bzw. der Taschenwand. Zudem kommt es noch zu einer Kollision des Ausschieberhalses 19b mit den den Spalt 21 begrenzenden (unteren) Wandungen der jeweiligen Tasche 13.

Um die vorstehend beschrieben Kollisionen verhindern oder erkennen zu können, ist erfindungsgemäß unter anderem vorgesehen, in besonderer Weise kollisionsfreie Verfahrwege für die Einschieber 11, die Taschen 13 sowie die Ausschieber 19 zu erzeugen, nachfolgend zusammenfassend auch "sich bewegende Maschinenorgane 11, 13, 19" genannt, auf Basis derer dann die Steuerung des jeweiligen Antriebs der sich bewegenden Maschinenorgane 11, 13, 19 erfolgt bzw. die Steuerung der entsprechenden Antriebe der Förderer, deren jeweilige Bestandteile die jeweiligen sich bewegenden Maschinenorgane 11, 13, 19 sind.

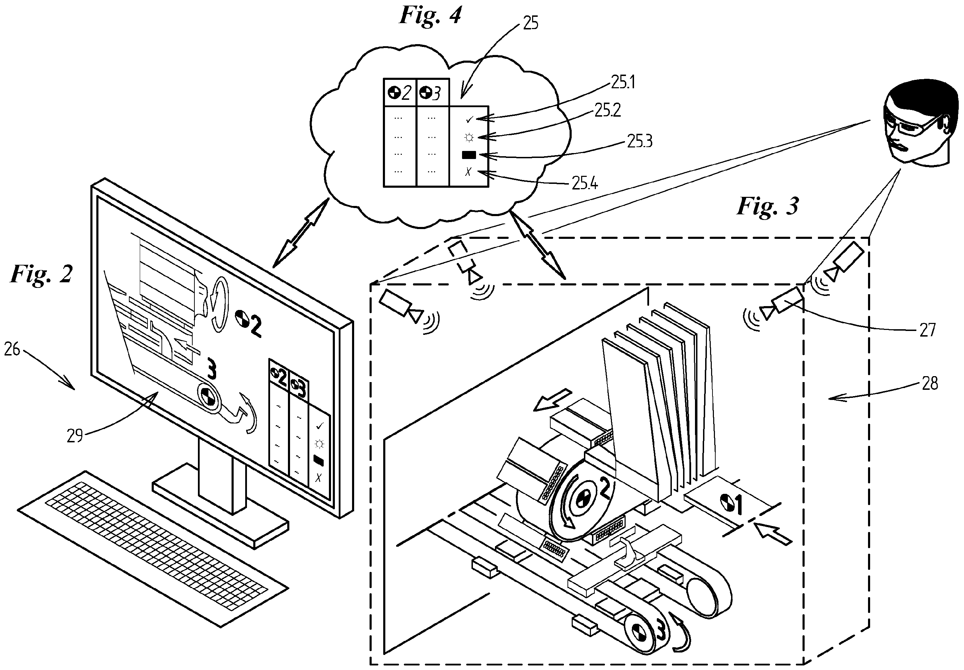

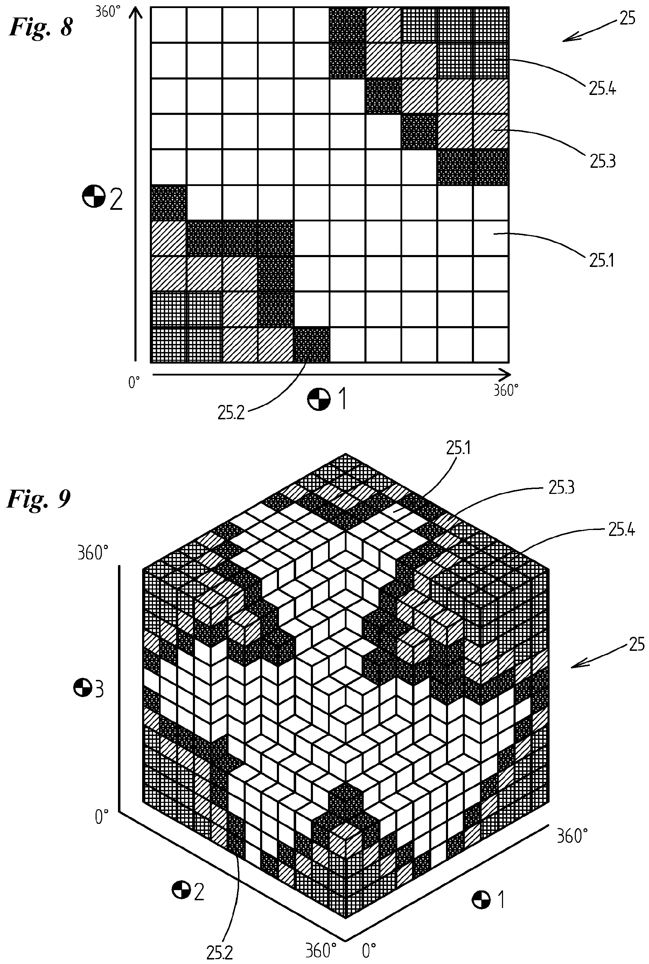

Zu diesen Zweck wird erfindungsgemäß zunächst (insbesondere vor Inbetriebnahme der Vorrichtung 10) ein Satz von den Arbeitsraum der Maschinenorgane 11, 13, 19 abdeckenden Arbeitsraumdaten erzeugt, beispielsweise als (ggf. auch mehrdimensionale, insbesondere dreidimensionale) Tabelle 25, vgl. Fig. 4, 9. Diese Arbeitsraumdaten beschreiben Relativpositionen der Maschinenorgane 11, 13, 19 in dem Arbeitsraum zueinander. Vorliegend beispielsweise mittels Kombinationen von Drehwinkelpositionen der Wellen 1, 2 oder 3 der die Maschinenorgane 11, 13, 19 jeweils antreibenden, als Servomotoren ausgebildeten Antriebe der Maschinenorgane 11, 13, 19.

Als Teilmenge der Arbeitsraumdaten bzw. der in der Tabelle 25 enthaltenen Daten ist zum einen ein Tabellenbereich 25.1 definiert, in dem sichergestellt ist, dass bei den dem Tabellenbereich 25.1 zugeordneten Kombinationen an Drehwinkeln bzw. Positionen der Wellen 1, 2, 3 der Antriebe die Maschinenorgane 11, 13, 19 bzw. die von dem Maschinenorgan 11 gehandhabten Produkte (Zigarettengruppe 23) keine Kollisionsstellungen einnehmen. Beispielsweise, weil sich die Maschinenorgane 11, 13, 19 sowie zudem die gehandhabten Zigarettengruppen 23 bei diesen Drehwinkelkombinationen sicher außer Eingriff befinden bzw. entsprechende Abstände voneinander aufweisen.

Als weitere Teilmenge ist ein Tabellenbereich 25.3 definiert (Produktkollisionsbereich), bei dem sicher ist, dass bei den dort enthaltenen Kombinationen an Drehwinkeln speziell eine Kollision der von den Einschiebern 11 gehandhabten Zigarettengruppen 23 mit der entsprechenden Tasche 13 erfolgt, vgl. auch Fig. 6.

Als weitere Teilmenge ist ein Tabellenbereich 25.4 definiert (Maschinenorgankollisionsbereich), bei dem sicher ist, dass bei den dort vorliegenden Kombinationen an Drehwinkeln speziell eine Kollision des Ausschiebers 19 mit der entsprechenden Tasche 13 erfolgt, vgl. auch Fig. 7 unten.

Schließlich ist als weitere Teilmenge ein Tabellenbereich 25.2 definiert (kollisionsnaher Bereich), in dem bei den dort vorliegenden Kombinationen an Drehwinkeln eine Kollision zwar nicht sicher ist, aber akut droht, da die entsprechenden Werte nahe an Kombinationen von Werten entweder des Tabellenbereichs 25.3 oder 25. 4 liegen, vgl. auch Fig. 7 oben.

Aus den Werten dieser Tabelle können dann beispielsweise unmittelbar sichere Verfahrwege für die Maschinenorgane 11, 13, 19 erzeugt werden, bei denen sichergestellt ist, dass keine Kollisionen auftreten sollten, wenn diese Verfahrwege ausschließlich Wertekombinationen umfassen, die in dem Tabellenbereich 25.1 hinterlegt sind bzw. keine Wertekombinationen, die in dem Tabellenbereich 25.2, 25.3 oder 25.4 hinterlegt sind.

Weiter können im Betrieb der Vorrichtung 10 die Ist-Bewegungen bzw. Ist-Positionen der Maschinenorgane 11, 13, 19 erfasst werden, also beispielsweise die tatsächlichen, aktuellen Ist-Drehwinkel und deren Ist-Kombinationen, und mit den in der Tabelle 25 hinterlegten Ist-Drehwinkeln bzw. Ist-Drehwinkelkombinationen verglichen werden. Genauso können aus den Ist-Werten abgeleitete Prognose-Daten, die zukünftige sich im Betrieb der Vorrichtung ergebende Positionen bzw. Drehwinkel der sich bewegenden Maschinenorgane 11, 13, 19 beschreiben, mit den hinterlegten Tabellenwerten verglichen werden.

Wenn dann der Vergleich ergibt, dass die Ist-Werte oder die Prognose-Werte bzw. Wertekombinationen zu einem der Tabellenbereiche 25.3 oder 25.4 gehören bzw. mit den Werten dieser Tabellenbereiche übereinstimmen, ist dies ein Hinweis auf eine sichere bestehende oder drohende Kollision. In diesem Fall kann dann vorgesehen sein, sämtliche oder einige der Antriebe der Maschinenorgane 11, 13, 19 unmittelbar stillzusetzen.

Wenn der Vergleich ergibt, dass die Ist-Werte oder die Prognose-Werte bzw. Wertekombinationen zu dem Tabellenbereich 25.2 gehören, kann beispielsweise vorgesehen sein, den nachfolgenden Ist-Daten erhöhte Aufmerksamkeit zu widmen. Gegebenenfalls kann dann beispielsweise vorgesehen sein, im weiteren Steuerungsverlauf eine vom Standard abweichende, zeitlich engmaschigere Prüfung derselben vorzunehmen.

Weiter ist denkbar, den vorgenannten Überwachungsaufwand zu reduzieren, indem Überwachungsschwerpunkte gesetzt werden. Beispielsweise, indem Ist-Werte bzw. Ist-Wertekombinationen, die in den kollisionsfreien Tabellenbereich 25.1 fallen, im Rahmen des Überwachungsalgorithmus nicht weiter beachtet werden.

Schließlich ist denkbar, das vorgenannte Überwachungsverfahren dazu zu nutzen, bei festgestellten Kollisionen eine "intelligente" Abschaltvorrichtung zu triggern. Beispielsweise könnten dann einzelne Maschinenbereiche abgeschaltet oder entkoppelt werden, sodass stromab liegende, nachfolgende Maschinenbereiche nicht beschädigt werden. Weiter könnte der Umfang der Abschaltung abhängig von der Schwere der Kollision abgestuft werden (vom vollständigen Not-Aus/Not-Halt der Maschine bis hin zur Abschaltung einzelner Komponenten). Weiterhin ist es denkbar, nach einer festgestellten Kollision Maschinenverriegelungen zu imitieren, die erst wieder nach einer Begutachtung der Kollision durch einen Bediener und nachfolgende Freigabe durch diesen wieder aufgelöst werden würden.

Besonders wichtig ist es, nochmals darauf hinzuweisen, dass durch die oben beschriebenen Definitionen der unterschiedlichen Arbeitsraumdatenbereiche unter anderem Kollisionen, bei denen Produkte (Zigarettengruppen 23) Schaden nehmen können, von Kollisionen zwischen Maschinenorganen unterschieden werden können, was es erlaubt, daraufhin entsprechend differenzierte Maßnahmen zu ergreifen.

Auch eine weitere Differenzierung ist insofern denkbar. So könnte der definierte Arbeitsraumdatenbereich (Tabellenbereich 25.3), in dem Kollisionen zwischen von dem sich bewegenden ersten Maschinenorgan gehandhabten Produkten und einem zweiten Teil der Vorrichtung auftreten würden, noch einen Teildatenbereich (als Teildatenmenge) umfassen, in dem Kollisionen erster (größerer) Schwere auftreten, und einen Teildatenbereich, in dem Kollisionen zweiter, gegenüber der ersten Schwere geringerer Schwere auftreten.

Hierdurch könnten besonders schwere bzw. gravierende Produktkollisionen von weniger schweren/gravierenden Produktkollisionen unterschieden werden. Davon abhängig könnten dann insbesondere automatisch unterschiedliche Maßnahmen eingeleitet werden. Für den Fall einer besonders schweren Produktkollision, bei der als sicher gelten kann, dass das Produkt Schaden genommen hat, könnte beispielsweise vorgesehen sein, das betreffende Produkt automatisch aus der Vorrichtung 10 auszuschleusen. Oder es könnte vorgesehen sein, die Vorrichtung 10 mindestens in diesem Bereich automatisch anzuhalten und ggf. zu sperren, wobei die Sperre erst durch einen manuellen Eingriff eines Bedieners/Werkers aufgehoben werden könnte.

Was die Erzeugung der Arbeitsraumdaten bzw. der Tabellendaten der Tabelle 25 betrifft, so können diese allgemein gesprochen insbesondere automatisch oder teilautomatisch beispielsweise mittels eines auf einem Rechner 26 ablaufenden Simulationsprogramms 29 erzeugt werden, das die Bewegungen oder Positionen der sich bewegenden Maschinenorgane 11, 13, 19 bzw. der von diesen gehandhabten Produkte in dem Arbeitsraum simulieren kann, vgl. Fig. 2.

Die erzeugten Arbeitsraumdaten können beispielsweise in einem Cloud-Speicher oder einem anderen, dem Rechner 26 zugeordneten Speicher (zwischen-)gespeichert werden, vgl. Fig. 4.

Die Steuerung der Vorrichtung 10 oder entsprechende Steuerungen der Antriebe der Maschinenorgane 11, 13, 19 können dann entweder auf diese Arbeitsraumdaten zugreifen oder diese Arbeitsraumdaten werden ihnen übermittelt.

Denkbar ist dabei auch eine Online-Berechnung bzw. Online-Erzeugung der Arbeitsraumdaten mittels des Simulationsprogramms 29 mit nachfolgender Online-Übermittlung an die Steuerung der Vorrichtung 10 bzw. an die entsprechenden Steuerungen der Antriebe der Maschinenorgane 11, 13, 19. Wie der Fachmann erkennt, sind hier verschiedenste Varianten denkbar.

Denkbar ist weiter, dass das Simulationsprogramm 29 ein digitales Abbild 28 (digitaler Zwilling) der Vorrichtung 10 oder eines mindestens die sich bewegenden Maschinenorgane 11, 13, 19 umfassenden Vorrichtungsbereichs erstellt, vgl. Fig. 4.

Dieses digitale Abbild 28 könnte dann beispielsweise dazu verwendet werden, für einen Werker ein virtuelles Abbild der Vorrichtung 10 bzw. des Vorrichtungsbereichs zu erzeugen, beispielsweise mittels einer entsprechenden Virtual Reality (VR) Brille oder geeigneten Projektoren 27, vgl. Fig. 3. Der Werker könnte dann mechanische Zusammenhänge mittels des virtuellen Abbilds leicht erkennen oder bestimmte Problemstellungen. Dabei wäre insbesondere auch denkbar, dem Werker ein solches virtuelles Abbild im Falle einer erkannten oder drohenden Kollision zur Verfügung zu stellen, um ihm etwa eine Fehleranalyse zu vereinfachen.

### Bezugszeichenliste:

- 10: Verpackungsmaschine
- 11: Einschieber
- 12: Zigarettenmagazin
- 13: Taschen
- 14: Taschenförderer
- 15: Bereich
- 16: seitlicher Versatz
- 17: Bereich
- 19: Ausschieber
- 19a: Ausschieberplatte
- 19b: Traghals
- 20a: seitlicher Versatz
- 20b: seitlicher Versatz
- 21: Spalt
- 22: Zigaretten
- 23: Zigarettengruppe
- 24: Förderer
- 25: Tabelle
- 25.1: Tabellenbereich
- 25.2: Tabellenbereich
- 25.3: Tabellenbereich
- 25.4: Tabellenbereich
- 26: Rechner
- 27: Projektoren
- 28: Digitales Abbild
- 29: Simulationsprogramm

## Patentansprüche

1. Verfahren zum Erkennen und/oder Vermeiden von Kollisionen zwischen mindestens einem sich in einem Arbeitsraum, in dem solche Kollisionen auftretenden können, bewegenden, insbesondere (taktweise) mittels eines Elektromotors angetriebenen, ersten Maschinenorgan (11, 13, 19) einer Vorrichtung (10) zur Herstellung von Packungen, insbesondere für Zigaretten oder andere Tabakprodukte, oder zwischen sich in diesem Arbeitsraum bewegenden, von dem ersten Maschinenorgan (11, 13, 19) gehandhabten Produkten einerseits und andererseits einem zweiten Teil der Vorrichtung (10), bevorzugt einem zweiten sich bewegenden Maschinenorgan (11, 13, 19), **gekennzeichnet durch** folgende Maßnahmen:
a) Erzeugen von den Arbeitsraum abbildenden Arbeitsraumdaten (25), wobei innerhalb der Arbeitsraumdaten ein Arbeitsraumdatenbereich als Teilmenge der Arbeitsraumdaten definiert wird, in dem Kollisionen auftreten würden und/oder ein Arbeitsraumdatenbereich als Teilmenge der Arbeitsraumdaten, in dem keine Kollisionen auftreten können,
b1) Erzeugen eines kollisionsfreien Verfahrwegs für das erste sich bewegende Maschinenorgan (11, 13, 19) auf Basis der erzeugten Arbeitsraumdaten (25), gegebenenfalls zusätzlich eines kollisionsfreien Verfahrwegs für das zweite sich bewegende Maschinenorgan (11, 13, 19), sowie Steuern der Bewegung des sich bewegenden ersten Maschinenorgans (11, 13, 19), gegebenenfalls zusätzlich der Bewegung des zweiten sich bewegenden Maschinenorgans, nach Maßgabe des (ggf. jeweiligen) Verfahrwegs, und/oder
b2) Überwachen der Bewegung des sich bewegenden ersten Maschinenorgans (11, 13, 19), gegebenenfalls auch der Bewegung des zweiten sich bewegenden Maschinenorgans (11, 13, 19), auf Kollisionen oder mögliche Kollisionen auf Basis der erzeugten Arbeitsraumdaten (25).

2. Verfahren gemäß Anspruch 1, **dadurch gekennzeichnet, dass** die den Arbeitsraum abbildenden Arbeitsraumdaten (25) (vorzugsweise sämtliche) mögliche Positionen oder Bewegungen des sich in dem Arbeitsraum bewegenden ersten Maschinenorgans (11, 13, 19) und/oder der von diesem gehandhabten Produkte abbilden.

3. Verfahren gemäß Anspruch 2, **dadurch gekennzeichnet, dass** für den Fall, dass Kollisionen zwischen dem sich bewegenden ersten Maschinenorgan (11, 13, 19) und einem/dem zweiten sich bewegenden Maschinenorgan (11, 13, 19) erkannt oder verhindert werden sollen, die den Arbeitsraum abbildenden Arbeitsraumdaten (25) zusätzlich (vorzugsweise sämtliche) mögliche Positionen oder Bewegungen des zweiten sich bewegenden Maschinenorgans (11, 13, 19) abbilden.

4. Verfahren gemäß Anspruch 1, 2 oder 3, **dadurch gekennzeichnet, dass** die erzeugten Arbeitsraumdaten in einem Speicher (insbesondere einer Recheneinrichtung) hinterlegt werden, insbesondere in einer Datenbank des Speichers, bevorzugt in einer Tabelle der Datenbank.

5. Verfahren gemäß einem oder mehreren der vorhergehenden Ansprüche, **dadurch gekennzeichnet, dass** die Arbeitsraumdaten insbesondere automatisch oder teilautomatisch mittels eines Programms erzeugt werden, das ein digitales Abbild (digitaler Zwilling) der Vorrichtung (10) oder eines mindestens das erste sich bewegende erste Maschinenorgan (11, 13, 19), gegebenenfalls auch das zweite sich bewegende Maschinenorgan (11, 13, 19), umfassenden Vorrichtungsbereichs erstellt, wobei das digitale Abbild insbesondere die Bewegungen oder Positionen des sich bewegenden ersten Maschinenorgans (11, 13, 19), gegebenenfalls auch des zweiten sich bewegenden Maschinenorgans (11, 13, 19), in dem Arbeitsraum simulieren kann, vorzugsweise zusammen mit den Bewegungen oder Positionen von dem sich bewegenden ersten Maschinenorgan (11, 13, 19) gehandhabten Produkten.

6. Verfahren gemäß einem oder mehreren der vorhergehenden Ansprüche, **dadurch gekennzeichnet, dass** die Arbeitsraumdaten insbesondere automatisch oder teilautomatisch mittels eines Simulationsprogramms erzeugt werden, das die Bewegungen oder Positionen des sich bewegenden ersten Maschinenorgans (11, 13, 19) und/oder von dem Maschinenorgan (11, 13, 19) gehandhabten Produkten in dem Arbeitsraum simulieren kann, gegebenenfalls zusammen mit den Bewegungen oder Positionen des zweiten sich bewegenden Maschinenorgans (11, 13, 19).

7. Verfahren gemäß einem oder mehreren der vorhergehenden Ansprüche, **dadurch gekennzeichnet, dass** zur Überwachung der Bewegung des sich bewegenden ersten Maschinenorgans (11, 13, 19) auf Kollisionen oder mögliche Kollisionen während des Betriebs der Vorrichtung (10) die Ist-Arbeitsraumdaten erfasst werden, die die aktuellen Ist-Positionen des sich bewegenden ersten Maschinenorgans (11, 13, 19) in dem Arbeitsraum beschreiben, gegebenenfalls auch die Ist-Positionen des zweiten sich bewegenden Maschinenorgans (11, 13, 19), und/oder die Ist-Positionen von jeweiligen Produkten in dem Arbeitsraum, die das sich bewegende erste Maschinenorgan (11, 13, 19) handhabt, und dass diese Ist-Arbeitsraumdaten oder aus den Ist-Arbeitsraumdaten abgeleitete, zukünftige Positionen des sich bewegenden ersten Maschinenorgans (11, 13, 19) bzw. der Produkte beschreibende Prognose-Arbeitsraumdaten mit den erzeugten Arbeitsraumdaten (25) daraufhin verglichen werden, ob die Ist-Arbeitsraumdaten zu dem Arbeitsraumdatenbereich gehören, in dem Kollisionen auftreten würden oder ob sie zu dem Arbeitsraumdatenbereich gehören, in dem keine Kollisionen auftreten würden.

8. Verfahren gemäß Anspruch 7, **dadurch gekennzeichnet, dass** für den Fall, dass auf Basis des Vergleichs erkannt wird, dass eine Kollision erfolgt ist oder eine Kollision bevorsteht, die weitere Bewegung des sich bewegenden ersten Maschinenorgans (11, 13, 19) gestoppt wird, gegebenenfalls auch des zweiten sich bewegenden Maschinenorgans (11, 13, 19), insbesondere, indem der/die Antrieb(e) desselben/desselben gestoppt wird/werden.

9. Verfahren gemäß einem oder mehreren der vorhergehenden Ansprüche, **dadurch gekennzeichnet, dass** zusätzlich zu einem Arbeitsraumdatenbereich, in dem Kollisionen auftreten werden und zusätzlich zu einem Arbeitsraumdatenbereich, in dem keine Kollisionen auftreten können, ein kollisionsnaher Arbeitsraumdatenbereich definiert wird, der benachbart ist zu dem Arbeitsraumdatenbereich, in dem die Kollisionen auftreten können.

10. Verfahren gemäß einem oder mehreren der vorhergehenden Ansprüche, **dadurch gekennzeichnet, dass** im Rahmen des Definierens des Arbeitsraumdatenbereichs, in dem Kollisionen auftreten würden, eine Unterteilung erfolgt in einen Arbeitsraumdatenbereich, in dem Kollisionen zwischen von dem sich bewegenden ersten Maschinenorgan (11, 13, 19) gehandhabten Produkt und einem zweiten Teil der Vorrichtung (10) auftreten würden, insbesondere dem zweiten sich bewegenden Maschinenorgan (11, 13, 19), und in einen Arbeitsraumdatenbereich, in dem Kollisionen auftreten würden zwischen dem sich bewegenden ersten Maschinenorgan (11, 13, 19) und einem zweiten Teil der Vorrichtung, insbesondere dem zweiten sich bewegenden Maschinenorgan (11, 13, 19).

11. Verfahren gemäß einem oder mehreren der vorhergehenden Ansprüche, **dadurch gekennzeichnet, dass** die Arbeitsraumdaten Werte von Parametern eines das sich bewegende erste Maschinenorgan (11, 13, 19) antreibenden, regelbaren Elektromotorantriebs des ersten sich bewegenden Maschinenorgans (11, 13, 19) umfassen, insbesondere eines Servoantriebs, insbesondere Drehwinkelwerte oder Drehmomentwerte, und gegebenenfalls zusätzlich Werte solcher Parametern eines zweiten, das zweite sich bewegende Maschinenorgan (11, 13, 19) antreibenden, regelbaren Elektromotorantriebs des zweiten sich bewegenden Maschinenorgans (11, 13, 19), insbesondere eines Servoantriebs.

12. Verfahren gemäß einem oder mehreren der vorhergehenden Ansprüche, **dadurch gekennzeichnet, dass** die insbesondere von dem Simulationsprogramm erzeugten Arbeitsraumdaten einer das sich bewegende erste Maschinenorgan (11, 13, 19) steuernden Steuerung der Vorrichtung (10) bevorzugt automatisch übermittelt werden, bevorzugt auch einer Steuerung des zweiten sich bewegenden Maschinenorgans (11, 13, 19), insbesondere von einem Cloud-Speicher, auf dem die Arbeitsraumdaten gespeichert sind

13. Verfahren gemäß einem oder mehreren der vorhergehenden Ansprüche, **dadurch gekennzeichnet, dass** die Arbeitsraumdaten (25) vor Inbetriebnahme der Vorrichtung (10) erzeugt werden.

14. Verfahren gemäß einem oder mehreren der vorhergehenden Ansprüche, **dadurch gekennzeichnet, dass** im Rahmen des Definierens des Arbeitsraumdatenbereichs, in dem Kollisionen auftreten würden, ein Arbeitsraumdatenbereich definiert wird, in dem Kollisionen zwischen von dem sich bewegenden ersten Maschinenorgan (11, 13, 19) gehandhabten Produkten und einem zweiten Teil der Vorrichtung (10) auftreten würden, insbesondere dem zweiten sich bewegenden Maschinenorgan (11, 13, 19), und dass in diesem Arbeitsraumdatenbereich ein Teildatenbereich definiert wird, in dem Kollisionen erster (größerer) Schwere auftreten, und ein Teildatenbereich, in dem Kollisionen zweiter, gegenüber der ersten Schwere geringerer Schwere auftreten.
